# DEMANDE DE BREVET EUROPEEN

(11) **EP 3 622 809 A1**
(43) Date de publication de la demande: **18.03.2020**
(21) Numéro de dépôt: 18306210.8
(22) Date de dépôt: 17.09.2018
(51) Int. Cl.: A01G 17/02

(54) **PIQUET DE VIGNE CONNECTÉ, SYSTÈME ET PROCÉDÉ**

(71) Demandeur: Alcom Technologies, 10600 Barberey St Sulpice (FR)
(72) Inventeur: GAUTIER, Fabrice, 33000 Bordeaux (FR)
(74) Mandataire: Ipside

(57) **Abrégé**

L'invention concerne un poteau (100) pour la surveillance de l'état d'au moins une vigne (200) dans un vignoble, comportant des capteurs permettant la mesure de paramètres endogènes à la vigne, et comportant en outre des capteurs permettant la mesure de paramètres exogènes à la vigne et à sa culture. L'invention porte également sur un système et un procédé pour la surveillance de l'état de la vigne et pour l'aide à sa conduite par des calculs prédictifs.

## Description

### DOMAINE TECHNIQUE

La présente invention appartient au domaine de la viticulture. Elle concerne plus particulièrement un dispositif connecté et un procédé pour la gestion et la surveillance à distance de l'état des vignes dans un vignoble.

### ÉTAT DE L'ART

La surveillance de l'état d'une vigne, qu'il s'agisse de son état sanitaire mais également de l'état de la taille ou de la maturité de ses fruits, est, de tout temps, réalisée par une inspection physique sur le terrain par une personne experte qui réalise un constat, et si besoin, pratique des mesures in situ et des prélèvements pour procéder à des analyses en laboratoire.

Cette méthode historique est encore largement appliquée, toutefois, pour protéger la vigne ou favoriser la maturation du raisin, il a également été considéré des dispositifs de protection ou de mécanisation des opérations liées à la culture de la vigne, ces dispositifs déclenchant des opérations particulières en fonction de conditions locales déterminées par des capteurs.

Cependant, aucun des dispositifs connus ne propose une surveillance globale d'un ensemble de paramètres susceptibles de produire à distance des indicateurs de l'état de la vigne afin de déclencher des interventions sans la nécessité de faire procéder à un diagnostic par un expert présent sur le vignoble.

### PRÉSENTATION DE L'INVENTION

La présente invention vise à pallier les inconvénients de l'art antérieur.

À cet effet, la présente invention concerne un poteau pour la surveillance de l'état d'au moins une vigne dans un vignoble, comportant une pluralité de capteurs permettant la mesure de paramètres exogènes à la vigne.

Ce poteau est remarquable en ce qu'il comporte des capteurs permettant la mesure de paramètres endogènes à la vigne et à sa culture.

Ainsi le poteau est en mesure de capter et de transmettre un ensemble de paramètres propres à la vigne et également à son environnement, plus ou moins distants dans le temps et dans l'espace, et susceptible d'influencer l'évolution de la vigne.

Dans diverses formes de réalisation, le poteau comporte tout ou partie des caractéristiques suivantes pour autant qu'elles soient techniquement opérables :
- le poteau comporte une combinaison de capteurs parmi des capteurs de température, des capteurs d'humidité, des capteurs de pression, des capteurs de pluviométrie, des capteurs d'ensoleillement, des capteurs de vitesse du vent, des capteurs chimiques, des capteurs de mouvement, et des capteurs d'image ;
- le poteau comporte des moyens de traitements associés aux capteurs, un dispositif d'émission réception et une source d'alimentation en énergie électrique ;
- la source d'alimentation en énergie électrique comprend au moins une batterie électrique rechargeable ;
- le poteau comporte au moins une mémoire de stockage des données de mesures issues des capteurs et un système d'horodatage des mesures desdits capteurs ;
- le poteau comporte un matériel informatique de traitement des données de mesures des capteurs.

L'invention concerne également un système pour la surveillance de l'état d'au moins une vigne dans un vignoble, le système comportant au moins un poteau conforme à un poteau de l'invention et un centre de traitement distant comprenant au moins un serveur de base de données et au moins un calculateur, tous deux connectés audit au moins un poteau.

Les paramètres mesurés par les capteurs du poteau peuvent ainsi être reçus par le centre de traitement pour être stockés et exploités.

Avantageusement, le serveur de base de données est sécurisé par une blockchain.

Plus particulièrement, au moins un programme implémentant des algorithmes d'intelligence artificielle est installé dans le calculateur.

De façon avantageuse, le système comporte un terminal d'affichage de données traitées issues du centre de traitement distant.

Dans ce dernier cas, et suivant une forme de réalisation, le terminal est un terminal mobile apte à se connecter à un réseau sans fil.

Dans une forme de réalisation, le système comporte une pluralité de poteaux et chacun desdits poteaux est relié au centre de traitement distant par une liaison sans fil.

L'invention concerne également un procédé de surveillance et de gestion des vignes dans un vignoble.

Le procédé comporte une étape de mesure de paramètres exogènes à la vigne et de paramètres endogènes à la vigne par au moins un poteau conforme à un poteau de l'invention et se caractérise en ce qu'il comprend en outre les étapes de :
- transmission des données de mesures à un serveur de base de données sécurisé par une blockchain ;
- communication des données de mesures par ledit serveur à un calculateur ;
- traitement desdites données par au moins un programme d'intelligence artificielle ;
- publication des données traitées, des calculs prédictif et/ou d'alertes sur un portail web et ou envoi des données traitées et ou d'alertes à un terminal.

Dans un mode de mise en oeuvre, le programme d'intelligence artificielle met en oeuvre les données exogènes à la vigne et les données endogènes à la vigne pour effectuer une analyse prédictive.

Dans un mode de mise en oeuvre, l'étape de mesure comprend des mesures de paramètres parmi la température de l'air, la température du sol, l'humidité de l'air, l'humidité du sol, la pression atmosphérique, la pluviométrie, l'ensoleillement, la vitesse du vent, la taille et la couleur des éléments de la vigne, la présence de dangers biologiques, la concentration dans l'air et dans le sol de produits chimiques, des passages d'humains et de machines.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un dispositif et d'un procédé pour la détermination de l'état d'au moins un pied de vigne, avantageusement d'un ensemble de pieds de vigne localisés dans un espace déterminé, conformes aux principes de l'invention.

### BRÈVE DESCRIPTION DES FIGURES

Les différentes figures ainsi que les éléments d'une même figure ne sont pas nécessairement représentés à la même échelle. Sur l'ensemble des figures, les éléments identiques ou équivalents portent le même repère numérique.

Il est ainsi illustré en :
- Figure 1 : une vue de face schématique d'un poteau selon l'invention installé à proximité d'une vigne ;
- Figure 2 : une vue de dessus schématique d'une parcelle de vignoble dans laquelle sont installés deux poteaux selon l'invention ;
- Figure 3 : un schéma simplifié du principe de fonctionnement d'un système de surveillance de l'état de la vigne selon l'invention ;
- Figure 4 : les principales étapes d'un procédé de surveillance intelligente de l'état de la vigne selon l'invention.

### DESCRIPTION DÉTAILLÉE DE MODES DE RÉALISATION

Dans le mode de réalisation décrit ci après, on fait référence à un dispositif, un système et un procédé destinés principalement à la gestion et la surveillance à distance de la vigne. Cet exemple est donné pour une meilleure compréhension de l'invention et n'exclut pas son application à d'autres cultures agricoles.

La culture de la vigne, ou viticulture, est généralement réalisée par palissage.

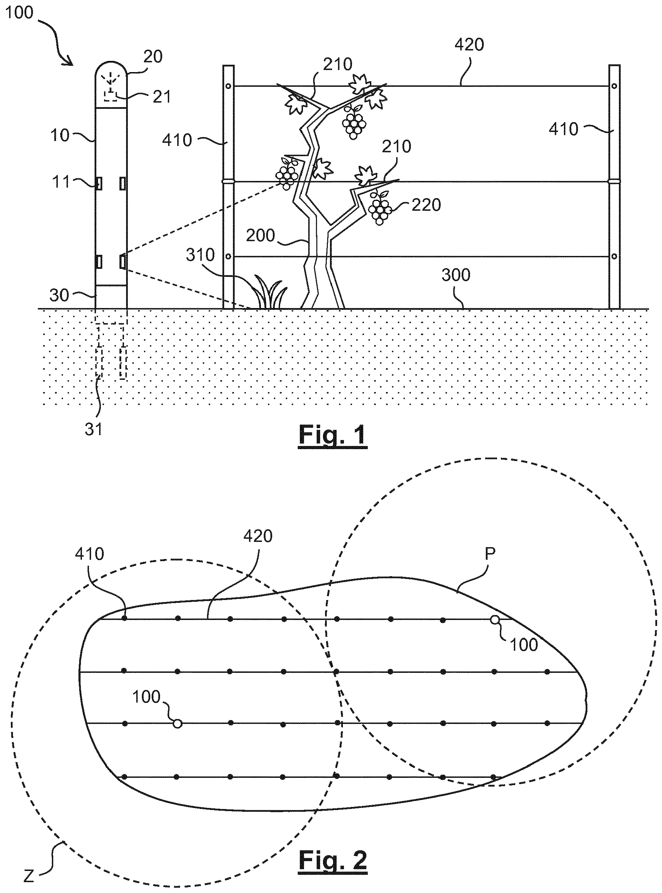

Dans cette technique et en se référant à la figure 1, les rameaux 210 d'un pied de vigne 200 sont supportés par une série de fils 420 disposés à différentes hauteurs et tendus entre des piquets 410 plantés en terre régulièrement espacés et disposés en rangs suffisamment distants entre eux pour permettre les interventions, manuelles et ou mécanisées, nécessaires aux soins et à l'exploitation de la vigne, en particulier la taille, les traitements phytosanitaires et la vendange.

Dans la description le terme « vignoble », normalement utilisé pour désigner un terrain planté de vignes, sera parfois utilisé dans le présent document par métonymie pour désigner une vigne. Ce dernier sens découle directement du contexte dans lequel ce terme vignoble est utilisé.

Selon l'invention, un poteau 100, comportant principalement une pluralité de capteurs et de moyens associés aux capteurs, est agencé dans un vignoble pour réaliser des mesures sur une zone déterminée dudit vignoble.

Le poteau 100, selon l'exemple de réalisation illustré à la figure 1, comporte une première série de capteurs 11 répartis sur un tronçon central 10 et une seconde série de capteurs 31 rattachés à une base 30. Le tronçon central 10 du poteau 100 est surmonté d'un dôme 20 dans lequel un émetteur-récepteur 21 est placé.

La première série de capteurs 11 comprend, non exclusivement, des capteurs de température de l'air, d'humidité de l'air, de pression atmosphérique, de pluviométrie, d'ensoleillement, de vitesse du vent, de composition chimique de l'air, de détection et de caractérisation d'intrants, de mouvement, et d'image.

La seconde série de capteurs 31 quant à elle comprend, non exclusivement, des capteurs de température du sol, d'humidité du sol, de détection et de caractérisation d'engrais, de mesure du pH du sol, et d'enherbement. Ces capteurs sont pour la plupart des sondes sol enterrées.

Dans le cadre de l'invention, on peut utiliser des capteurs de température tels que des thermistances, des sondes platine ou des circuits intégrés sur silicium, des capteurs d'humidité tels que des capteurs capacitifs ou des capteurs résistifs, des capteurs de pression atmosphérique tels que des baromètres numériques, des capteurs de pluviométrie tels que des pluviomètres, des capteurs d'ensoleillement tels que des capteurs optoélectroniques, des capteurs de vitesse du vent tels que des anémomètres ou des systèmes thermosensibles, des capteurs de composition chimique tels que des capteurs à électrolyte solide, à oxyde semi-conducteur, à conductivité thermique ou ampérométriques, des capteurs de mouvement tels que des capteurs infrarouges pyroélectriques, des capteurs d'image tels que des caméras, multi-spectrales ou non, et des capteurs de pH tels que des pH-mètres.

D'autres types de capteurs équiperont le poteau le cas échéant en fonction des informations qui seront souhaitées pour la détermination de l'état de la vigne.

Le poteau comporte également un ensemble de servitudes pour assurer le fonctionnement des capteurs 11 et 31, la collecte des données issues desdits capteurs et leur transmission à un centre de traitement distant par le biais de l'émetteur-récepteur 21.

En particulier le poteau 100 comporte une horloge, ou tout autre dispositif tel qu'un récepteur, lui permettant d'attribuer une date à chaque enregistrement réalisé. Dans le cas de la mise en oeuvre d'un récepteur, les signaux reçus comportant la date peuvent être ceux d'un émetteur radio terrestre diffusant un signal comportant la date ou encore un signal satellite tel qu'un signal de système de localisation par satellite.

L'ensemble de servitudes comporte également un dispositif d'alimentation en énergie électrique permettant de fournir l'énergie électrique nécessaire au fonctionnement des différents composants du poteau 100. Un tel dispositif d'alimentation en énergie comporte des accumulateurs électriques, avantageusement des accumulateurs électriques rechargeables.

Par exemple, le poteau 100 comporte une batterie électrique rechargeable et extractible au niveau de sa base 30, ladite batterie étant placée dans un compartiment étanche assurant sa protection contre les intempéries.

Outre les capteurs précités, le poteau 100 peut comporter au moins un capteur d'énergie solaire de type photovoltaïque adapté pour alimenter les capteurs et pour recharger les accumulateurs électriques.

Dans une forme alternative de réalisation, le poteau 100 est raccordé à une source d'énergie électrique extérieure au moyen d'une ligne d'alimentation qui, le cas échéant, assure l'alimentation en énergie d'une pluralité de poteaux répartis dans le vignoble.

L'installation du poteau 100 dans un vignoble nécessite d'enfoncer une partie inférieure de sa base 30 dans le sol tel qu'illustré à la figure 1, le sol étant indiqué par la référence 300. Cette installation peut être réalisée par des moyens adaptés et de différentes manières, connues de l'homme du métier, en fonction de la nature du sol, telles qu'un enterrement dans un sol meuble à roche friable, un scellement au béton dans un sol dur et rocheux, ou un vissage dans tous types de sols.

Pour la mise en oeuvre de l'invention, le poteau 100 peut être installé à proximité d'un piquet 410, comme sur la figure 1, ou remplacer ledit piquet en assurant un accrochage et un maintien des fils 420 de palissage.

La figure 2 illustre un cas de remplacement de piquets de palissage par des poteaux 100.

La répartition des poteaux 100 dans une parcelle P dépend de la portée des capteurs ainsi que du degré de précision recherché pour les différentes mesures. Les différentes mesures effectuées par un poteau 100, et reflétant localement les phénomènes mesurés, peuvent être extrapolées à une zone Z autour dudit poteau avec une incertitude acceptable en dessous d'une valeur seuil déterminée, 5% par exemple. En dehors de cette zone, les extrapolations revêtent une incertitude considérable empêchant leur validation.

De ce fait, on peut réaliser un maillage de la parcelle P avec les zones d'extrapolation admissible en plaçant les poteaux 100 de sorte à optimiser le recouvrement de ladite parcelle.

La transmission des données entre le poteau 100 et le centre de traitement distant peut être réalisée par une liaison filaire, ou de préférence, par ondes électromagnétiques.

Dans une forme de réalisation, des moyens de collecte et de transmission des données comportent un émetteur radio pour transmettre les données au centre de traitement distant. Avantageusement dans ce cas, l'émetteur utilise les réseaux disponibles de transmission sans fil de données tels que les réseaux de téléphonie cellulaire de type GSM, les réseaux de transmission sans fils de données tels que Sigfox® ou LoRa®, ou un réseau local mis en place à cet effet, par exemple un réseau sans fil de type Wi-Fi.

Les données sont transmises soit lors de leurs acquisitions soit à une date déterminée lors d'une session de transmission de données qui auront dans ce cas été mémorisées dans une mémoire tampon du poteau 100. La session de transmission est par exemple déclenchée par le poteau à des dates prédéfinies, par exemple avec une périodicité programmée, ou déclenchée par le centre de traitement qui doit recueillir les données, ou encore par un système de supervision des acquisitions des données.

Dans une forme alternative ou complémentaire de réalisation, les moyens de collecte comportent principalement une mémoire de stockage des données qui sont mémorisées par le poteau pendant une durée adaptée au temps entre deux lectures successives de ladite mémoire de stockage. Dans ce cas les données stockées sont collectées par une interrogation de la mémoire de stockage, interrogation qui peut être réalisée par extraction physique de ladite mémoire installée dans le poteau mais de préférence par un téléchargement de ladite mémoire dans un dispositif d'enregistrement.

Le téléchargement peut être réalisé par une liaison filaire connectée à une prise prévue à cet effet, mais il sera de préférence réalisé par une liaison sans contact électrique, par exemple une liaison magnétique ou électromagnétique à courte portée, qui évite les inconvénients liés à des connecteurs électriques soumis, dans le cas de la culture de la vigne, à un environnement relativement agressif.

Dans une forme de réalisation alternative, au moins certains des capteurs du poteau peuvent être interrogés individuellement à distance depuis le centre de traitement afin de délivrer audit centre de traitement une valeur instantanée ou un état d'une mesure exogène ou endogène de la vigne.

Il est ainsi possible, par exemple, de contrôler un état de la vigne après un épisode de grêle au moyen d'images transmises par un ou plusieurs capteurs d'images intégrés dans un poteau, ou une quantité surfacique d'eau reçue par la vigne lors d'épisode de pluie au moyen de la mesure transmise par un pluviomètre intégré au poteau.

Dans une forme de réalisation, le poteau est extensible en hauteur de sorte que des positions surélevées de certains capteurs puissent être modifiées pour réaliser des mesures qui exigent que les capteurs concernés se trouvent à des hauteurs suffisantes au dessus du sol ou au dessus de la végétation formée par la vigne.

Dans ce cas, le poteau comporte donc au moins deux sections dont une section inférieure fixée au sol ou à un support fixe par rapport au sol et au moins une section supérieure mobile pour s'élever au dessus de la section inférieure.

La section supérieure peut être coulissante ou articulée par rapport à la section inférieure. La section supérieure peut également être extensible, par exemple par un montage de type pantographe.

La section supérieure comporte les capteurs devant prendre une position surélevée pour réaliser des mesures de la qualité attendue. Ce cas correspond en particulier aux mesures réalisées à distance et aux capteurs d'images.

Dans une forme de réalisation, la section supérieure porte une plate-forme supportant des capteurs.

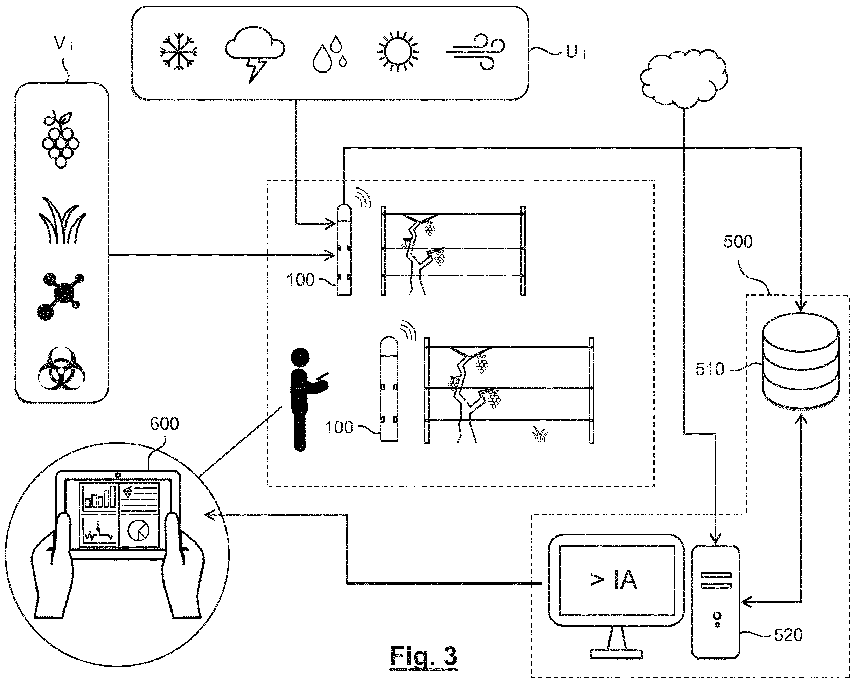

Pour réaliser une gestion et une surveillance de l'état de la vigne, un système tel que représenté sur la figure 3 comporte au moins un poteau 100 tel qu'exposé supra et un centre de traitement constitué au moins d'un serveur de base de données 510 et d'un calculateur 520.

Chaque poteau 100 est connecté au centre de traitement, ce dernier reçoit les mesures réalisées par chaque poteau, lesdites mesures étant horodatées.

Comme il a été expliqué dans la description de la structure du poteau, différents moyens et méthodes peuvent être mis en oeuvre pour transmettre les données du poteau au centre de traitement : transmission sans fil ou filaire des données, en temps réel ou en temps différé ; lecture d'une mémoire tampon du poteau, interrogation à la demande d'un ou de plusieurs capteurs.

Les différents modes de transmission des données sont le cas échéant combinables, par exemple pour répondre à des contraintes opérationnelles.

Le serveur de base de données 510 permet de recevoir, de stocker et de transmettre les données brutes des mesures réalisées par chaque poteau 100. Ces données sont mises à disposition du calculateur 520 qui peut interroger spécifiquement le serveur de base de données 510 en fonction du programme qui sera exécuté, de sorte à ne récupérer que des données nécessaires aux calculs prévus dans ledit programme.

Pour des raisons de sécurité et de protection des viticulteurs contre des tentatives de falsification des données, le serveur de base de données est de préférence sécurisé par une blockchain dont les certificats seront mis à disposition des personnes ayant besoin d'en connaître.

Le serveur de base de données 510 permet en outre de stocker des données traitées par le calculateur 520, autrement dit, les calculs effectués par ledit calculateur ainsi que les comptes rendus d'analyse établis.

Le calculateur 520 comporte principalement un système informatique ou une pluralité de systèmes informatiques de traitement de données numériques avec notamment des processeurs, des mémoires de programme, des mémoires de données, des dispositifs d'enregistrement et de stockage de données et des moyens de communication appropriés.

L'analyse et le traitement par le calculateur 520 des données de mesures issues des capteurs du poteau 100 sont réalisés par des algorithmes d'intelligence artificielle implémentés dans des programmes dudit calculateur. Principalement, ces algorithmes stochastiques opèrent une analyse prédictive basée sur un apprentissage automatique, propre ou non à chaque vignoble, en fonction des données exogènes et endogènes à la vigne considérée.

Les résultats de mesures des capteurs du poteau 100 ainsi que les comptes rendus d'analyse de données traitées générés par les programmes du calculateur 520 sont mis à disposition du viticulteur sous différentes formes, ils peuvent être affichés directement sur une interface graphique du calculateur, publiés sur un portail web d'accès restreint, ou envoyés à un terminal fixe ou mobile tel qu'un smartphone ou une tablette numérique 600 comme illustré sur la figure 3.

L'information produite par le système selon l'invention et dont dispose le viticulteur permet à la fois la surveillance de l'état de la vigne, par un simple suivi régulier, et la gestion de ladite vigne, par une prise de décision qui découle de l'évolution de ladite information. Cette information repose sur des paramètres pouvant être classés en deux catégories principales : des paramètres exogènes à la vigne Uᵢ, indépendants de la vigne, et des paramètres endogènes à la vigne Vᵢ dépendants directement ou indirectement de la vigne et de son traitement.

Les paramètres exogènes Uᵢ regroupent, non exhaustivement, la température de l'air et la température du sol, l'humidité de l'air et l'humidité du sol, la pression atmosphérique, la pluviométrie, l'ensoleillement, et la vitesse du vent, le niveau et la tenue des intrants, les passages de machines et/ou de personnels intervenant dans l'entretien et le traitement de la vigne. Ces différents paramètres sont respectivement mesurés par les capteurs de température, les capteurs d'humidité, les capteurs de pression atmosphérique, les capteurs de pluviométrie, les capteurs d'ensoleillement, les capteurs de vitesse du vent, des capteurs de détection de présence de machines et/ou de personnes.

Les paramètres endogènes Vᵢ sont quant à eux liés à l'état de la vigne et à son traitement effectué avec une présence humaine ou mécanique dans la vigne, et regroupent, non exhaustivement, les caractéristiques de la grappe à savoir sa taille et sa couleur, les caractéristiques du cep, les caractéristiques de la feuille, la présence de dangers biologiques sur la vigne, la présence d'adventices, les concentrations dans l'air et dans le sol de produits phytosanitaires, de biocides ou autres produits chimiques ou biologiques de traitement. Les caractéristiques de la grappe, du cep et de la feuille, la présence de dangers biologiques apparents et la présence d'adventices sont principalement mesurées par les capteurs d'images et de caractéristiques physiologiques de l'état de la vigne, et les concentrations de produits chimiques sont mesurées par les capteurs chimiques.

Les paramètres mesurés par les capteurs du poteau 100 sont envoyés, en temps réel ou à intervalles de temps réguliers, au serveur de base de données 510 au moyen d'un réseau sans fil. A la requête du calculateur 520, des paramètres lui sont transmis par le serveur de base de données 510. Le calculateur 520 opère ensuite des séries de calculs en exécutant des programmes dédiés. Parmi les programmes installés dans le calculateur 520, certains réalisent une simple présentation, interactive ou non, des données recueillies, d'autres procèdent à une interprétation et à une représentation multiforme des données, et d'autres encore compilent des algorithmes d'intelligence artificielle pour prédire des informations non disponibles en l'état. Par exemple, les algorithmes sont capables, d'après un modèle connu en pathologie végétale, de prédire l'imminence d'une maladie de la vigne lorsque les trois conditions suivantes sont réunies : hôte sensible, agent pathogène et environnement favorable. Un hôte sensible peut correspondre à un fruit présentant une taille et une couleur anormales à un certain stade de maturation, l'agent pathogène peut être détecté soit par les capteurs d'images lorsqu'il est apparent, soit par les capteurs chimiques, et un environnement favorable correspond par exemple au concours de certaines conditions de température et d'humidité favorisant la prolifération d'une contamination localisée.

D'autres phénomènes peuvent être prédits grâce à l'analyse prédictive et à l'apprentissage automatique, les algorithmes apprenant à lier certains phénomènes à des combinaisons de valeurs prises par certains paramètres, pour ensuite prédire l'occurrence future desdits phénomènes dès que lesdites combinaisons se reproduisent.

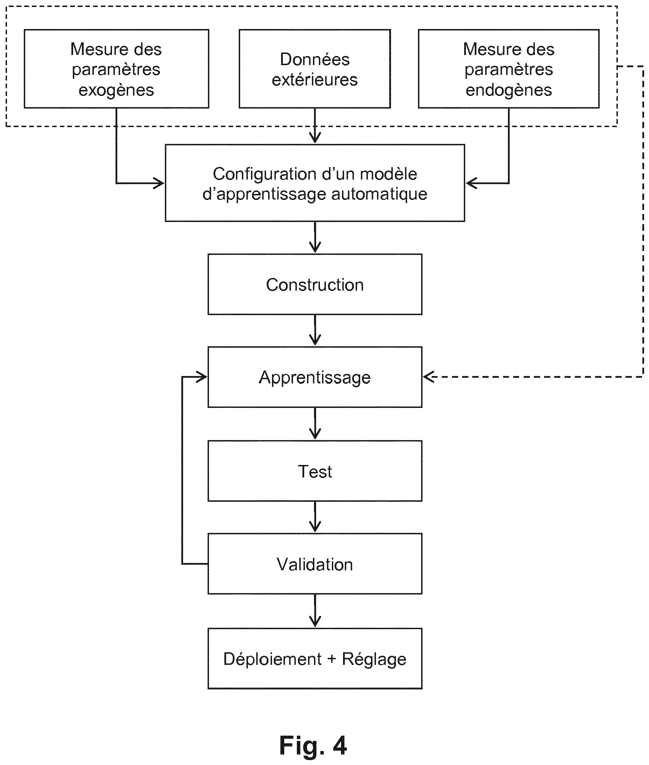

La figure 4 représente un exemple d'enchainement d'étapes nécessaires à l'élaboration d'un modèle prédictif dans le cadre de l'invention. Il s'agit tout d'abord de collecter toutes les données à disposition, directement issues des capteurs du poteau ou provenant de sources extérieures, ensuite, un modèle d'apprentissage est choisi puis configuré suivant la complexité du cas. De façon subséquente, ce modèle sera construit pour interpréter les données en se basant sur un corpus de connaissances agronomiques, et plus spécialement viticoles. Dès lors, l'étape clé de l'apprentissage peut commencer pour permettre au modèle de répondre systématiquement aux données qui lui parviennent. In fine, le modèle est testé, validé puis déployé pour des fins de réglage et d'amélioration.

Un traitement de l'ensemble des paramètres recueillis permet de définir et de suivre une représentation paramétrique de l'état de la vigne, et en transmettant à distance ces paramètres, par des moyens appropriés, on évite des déplacements inutiles du viticulteur en lui permettant de connaître instantanément les conséquences d'intempéries, de conditions climatiques extrêmes, de la présence de personnes non sollicitées susceptibles de voler du raisin, de la présence d'animaux susceptibles d'endommager la vigne ou le raisin, etc. De plus, le viticulteur dispose ainsi à distance des informations pour optimiser la vendange.

L'analyse de ces données permet en outre de prévoir l'évolution de l'état de la vigne et de calculer par exemple des tendances en fonction de la variation de la couleur des raisins rapportée à une différence de temps, ou en combinant les mesures de couleur et les mesures simultanées des températures de l'air et du sol, ou encore en combinant la mesure des passages humains et la mesure des concentrations de produits phytosanitaires pour recalculer des créneaux de passage avec une moindre exposition aux produits nocifs limitant ainsi toute répercussion grave sur la santé des viticulteurs et autres visiteurs de la vigne. Ces calculs peuvent être faits par des moyens appropriés, par exemple grâce à un micro-processeur placé in situ dans le poteau 100 ou à distance dans le centre de traitement au moyen du calculateur 520.

Il devient ainsi possible, conformément à la présente invention, non seulement de transmettre les informations permettant d'établir un état instantané d'une vigne donnée et d'une zone environnante déterminée, mais aussi d'interpréter ces données et de prévoir des phénomènes imminents ou plus lointains, et éventuellement de déclencher des alarmes en fonction de ces prévisions, elles-mêmes combinées à des prévisions exogènes de la vigne, comme par exemple les prévisions météorologiques fournies par des organismes de prévisions, par exemple Météo France ou les Chambres d'Agriculture, permettant d'établir une prévision optimale pour les traitements à effectuer dans le vignoble et/ou pour la vendange de la récolte. Ces phénomènes prévisibles sont par exemple l'atteinte de la vigne par une maladie contagieuse pouvant entraîner la perte d'un nombre importants de vignes.

Ainsi, le centre de traitement transmet l'ensemble des informations nécessaires à la surveillance et à la gestion de la vigne ainsi que les éventuelles alertes, alertant d'une situation critique ou d'un risque imminent, au viticulteur par tout moyen adapté. Le viticulteur peut à cet effet consulter les informations sur une application dédiée installée sur un terminal mobile connecté de type tablette intelligente 600 comme schématisé sur la figure 3.

## Revendications

1. Poteau (100) pour la surveillance de l'état d'au moins une vigne (200) dans un vignoble, comportant une pluralité de capteurs (11, 31) permettant la mesure de paramètres exogènes à la vigne, **caractérisé en ce qu'**il comporte en outre des capteurs permettant la mesure de paramètres endogènes à la vigne.

2. Poteau selon la revendication 1, comportant une combinaison de capteurs parmi des capteurs de température, des capteurs d'humidité, des capteurs de pression, des capteurs de pluviométrie, des capteurs d'ensoleillement, des capteurs de vitesse du vent, des capteurs chimiques, des capteurs de mouvement, et des capteurs d'image.

3. Poteau selon la revendication 1 ou la revendication 2, comportant des moyens de traitements associés aux capteurs, un dispositif d'émission réception (21) et une source d'alimentation en énergie électrique.

4. Poteau selon la revendication 3, dans lequel la source d'alimentation en énergie électrique comprend au moins une batterie électrique rechargeable.

5. Poteau selon l'une quelconque des revendications précédentes, comportant au moins une mémoire de stockage des données de mesures issues des capteurs et un système d'horodatage des mesures desdits capteurs.

6. Poteau selon l'une quelconque des revendications précédentes, comportant un matériel informatique de traitement des données de mesures des capteurs.

7. Système pour surveillance de l'état d'au moins une vigne (200) dans un vignoble, **caractérisé en ce qu'**il comprend au moins un poteau (100) selon l'une des revendications 1 à 6 et un centre de traitement distant comprenant au moins un serveur de base de données (510) et au moins un calculateur (520) connecté audit au moins un poteau.

8. Système selon la revendication 7, dans lequel le serveur de base de données (510) est sécurisé par une blockchain.

9. Système selon la revendication 7 ou la revendication 8, dans lequel au moins un programme implémentant des algorithmes d'intelligence artificielle est installé dans le calculateur (520).

10. Système selon l'une quelconque des revendications 7 à 9, comprenant en outre un terminal (600) d'affichage de données traitées issues du centre de traitement distant.

11. Système selon la revendication 10, dans lequel le terminal (600) est un terminal mobile apte à se connecter à un réseau sans fil.

12. Système selon l'une quelconque des revendications 7 à 11, comprenant une pluralité de poteaux (100) et dans lequel chacun desdits poteaux est relié au centre de traitement distant par une liaison sans fil.

13. Procédé de surveillance et de gestion des vignes dans un vignoble, comprenant une étape de mesure de paramètres exogènes à la vigne et de paramètres endogènes à la vigne par au moins un poteau (100) selon l'une des revendications 1 à 6, **caractérisé en ce qu'**il comprend en outre les étapes suivantes :
- transmission des données de mesures à un serveur de base de données (510) sécurisé par une blockchain ;
- communication des données de mesures par ledit serveur à un calculateur (520) ;
- traitement desdites données par au moins un programme d'intelligence artificielle ;
- publication des données traitées, des calculs prédictif et/ou d'alertes sur un portail web et ou envoi des données traitées et ou d'alertes à un terminal.

14. Procédé selon la revendication 13, dans lequel le programme d'intelligence artificielle met en oeuvre les données exogènes à la vigne et les données endogènes à la vigne pour effectuer une analyse prédictive.

15. Procédé selon la revendication 13 ou la revendication 14 dans lequel l'étape de mesure comprend des mesures de paramètres parmi la température de l'air, la température du sol, l'humidité de l'air, l'humidité du sol, la pression atmosphérique, la pluviométrie, l'ensoleillement, la vitesse du vent, la taille et la couleur des éléments de la vigne, la présence de dangers biologiques, la concentration dans l'air et dans le sol de produits chimiques, des passages d'humains et de machines.
